# FASCICULE DE BREVET EUROPEEN

(11) **EP 4 508 366 B1**
(45) Date de publication et mention de la délivrance du brevet: **29.04.2026**
(21) Numéro de dépôt: 23713726.0
(22) Date de dépôt: 10.03.2023
(51) Int. Cl.: F21S 41/55, F21S 41/657, F21S 45/10, B60Q 1/00, F21S 41/19, F21S 41/50, F21S 45/00

(54) **PROJECTEUR POUR VÉHICULE AUTOMOBILE MUNI D'UN ENJOLIVEUR À ÉLÉMENTS DE SÉCURISATION ANTI-VIBRATIONS**
MOTOR-VEHICLE HEADLAMP WITH ANTI-VIBRATION SECURING ELEMENTS ON THE MASK
SCHEINWERFER FÜR KRAFTFAHRZEUGE MIT EINER ZIERKAPPE MIT SCHWINGUNGSDÄMPFENDEN SICHERUNGSELEMENTEN

(30) Priorité: 11.04.2022 FR 2203315
(43) Date de publication de la demande: 19.02.2025
(73) Titulaire: Stellantis Auto SAS, 78300 Poissy (FR)
(72) Inventeur: VIDEIRA, Filipe, 78140 VELIZY VILLACOUBLAY (FR)
(74) Mandataire: ESIP
(86) Numéro de dépôt international: PCT/FR2023/050326
(87) Numéro de publication internationale: WO 2023/198970

(56) Documents cités:
- EP-A1- 3 109 537
- EP-A1- 3 653 436
- DE-U1- 202018 107 402
- US-A1- 2019 140 377
- US-A1- 2020 238 891

## Description

### Domaine technique de l'invention

L'invention concerne le domaine des systèmes d'éclairage et de signalisation des véhicules automobiles. L'invention porte en particulier sur un projecteur pour véhicule automobile. L'invention concerne également un véhicule automobile équipé d'un tel projecteur. L'invention s'applique, notamment, aux voitures.

### État de la technique antérieure

Les réglementations internationales imposent aux véhicules automobiles d'être pourvus à l'avant et à l'arrière de blocs optiques d'éclairage et de signalisation afin, d'une part, d'éclairer la route pour améliorer la visibilité du conducteur du véhicule, notamment en conditions nocturnes, et, d'autre part, de signaliser la position du véhicule aux autres usagers de la route. Un bloc optique comporte classiquement au moins un boîtier destiné à être fixé sur la structure du véhicule et dans lequel est monté, directement ou par l'intermédiaire d'un support dédié, au moins un dispositif lumineux apte à assurer une fonction photométrique d'éclairage comme par exemple un feu de route, un feu de croisement (dénommé également code), ou un feu de position (dénommé également veilleuse ou bien lanterne), ou bien encore une fonction photométrique de signalisation comme, par exemple, un feu de recul, un feu stop, un feu clignotant indicateur de changement de direction ou bien encore un feu diurne couramment désigné sous l'acronyme anglais DRL (*Daytime Running Light*) et s'allumant automatiquement lorsque le véhicule se déplace vers l'avant afin d'accroître sa visibilité dans des conditions de lumière du jour.

En ce qui concerne les blocs optiques avant d'éclairage, plus communément appelés projecteurs, les réglementations imposent également de pouvoir régler manuellement et électriquement la hauteur du faisceau lumineux projeté et, au moins manuellement, sa direction. Pour cela, le dispositif lumineux d'un projecteur est généralement articulé sur le boîtier du projecteur au moyen d'éléments de fixation mobiles et un moteur électrique permet le réglage de l'orientation et de l'inclinaison du dispositif lumineux pour, in fine, permettre de diriger le faisceau lumineux projeté en hauteur et en direction. Et pour permettre ces manipulations, un faisceau muni d'une première fiche est le plus souvent branché sur une prise d'alimentation du dispositif lumineux tandis qu'une deuxième fiche connectée à un autre faisceau est habituellement branchée sur une prise d'alimentation du moteur. Mais, du fait des vibrations dues à la conduite, ces éléments de connectique peuvent bouger et on court le risque que les faisceaux se déplacent vers des zones chaudes, ce qui peut engendrer leur usure prématurée, ou que les fiches se débranchent, ce qui peut entraîner le dysfonctionnement du dispositif lumineux et/ou empêcher la modification de son positionnement vis-à-vis du boitier. La divulgation du document US2020238891A1 est également pertinente pour la compréhension de l'invention.

### Résumé de l'invention

L'invention vise à pallier ces inconvénients. L'invention vise en particulier à fournir une solution pour, dans un projecteur d'un véhicule automobile, minimiser l'effet délétère des vibrations dues à la conduite sur certains éléments de connectique et sur certains faisceaux. L'invention a en particulier pour but de fournir des moyens pour sécuriser la connectique d'alimentation du dispositif lumineux d'un projecteur ainsi que celle du moteur électrique qui permet de modifier le positionnement du dispositif lumineux vis-à-vis du boîtier du projecteur, et ce tout en délimitant aussi le positionnement dans le projecteur du faisceau d'alimentation du dispositif lumineux. Par ce biais, l'invention a pour dessein d'améliorer la fiabilité des projecteurs de véhicules automobiles.

Ce but est atteint, selon un premier objet de l'invention, au moyen d'un projecteur pour véhicule automobile, ledit projecteur comprenant un boîtier formant sa face arrière qui coopère avec une glace formant sa face avant, un dispositif lumineux monté sur un support fixé au boîtier et, fixés au support, un moteur pour modifier le positionnement du dispositif lumineux vis-à-vis du boîtier et un enjoliveur, le projecteur comprenant en outre une prise pour alimenter le dispositif lumineux qui est immobilisée par au moins une paroi du support et l'enjoliveur comportant un premier élément de sécurisation en appui sur une première fiche branchée dans la prise et un deuxième élément de sécurisation en appui sur une deuxième fiche branchée sur le moteur, ces éléments de sécurisation permettant d'empêcher un débranchement des fiches.

Selon une variante, le premier élément de sécurisation peut être une patte qui s'étend selon la longueur de l'enjoliveur.

Selon une autre variante, le deuxième élément de sécurisation peut être un rail courbe muni d'un ergot en sa partie inférieure.

Selon une autre variante, le deuxième élément de sécurisation, le support et le moteur peuvent délimiter un espace au sein duquel s'insère un faisceau connecté à la première fiche.

Selon une autre variante, l'enjoliveur peut être vissé sur le support.

Selon une autre variante, l'enjoliveur peut être fixé au support grâce à au moins un insert.

De plus, l'invention a également pour objet un véhicule automobile équipé d'un projecteur tel que décrit ci-dessus.

### Brève description des figures

D'autres caractéristiques et avantages de l'invention apparaîtront à l'examen de la description détaillée ci-après, et des dessins annexés, sur lesquels :
[Fig. 1A] est une vue de face d'un projecteur pour véhicule automobile selon l'invention ;
[Fig. 1B] est une vue de face de certains éléments d'un projecteur pour véhicule automobile selon l'invention ;
[Fig. 2A] est une vue en perspective de certains éléments d'un projecteur pour véhicule automobile selon l'invention ;
[Fig. 2B] est une vue en perspective de certains éléments d'un projecteur pour véhicule automobile selon l'invention ;
[Fig. 3A] est une vue en perspective de certains éléments d'un projecteur pour véhicule automobile selon l'invention ;
[Fig. 3B] est une vue de face de certains éléments d'un projecteur pour véhicule automobile selon l'invention ;
[Fig. 4] est une vue en perspective de l'arrière d'un enjoliveur d'un projecteur pour véhicule automobile selon l'invention ;
[Fig. 5A] est une vue selon une première coupe transversale d'un projecteur pour véhicule automobile selon l'invention ;
[Fig. 5B] est une vue selon une deuxième coupe transversale d'un projecteur pour véhicule automobile selon l'invention.

### Description détaillée de l'invention

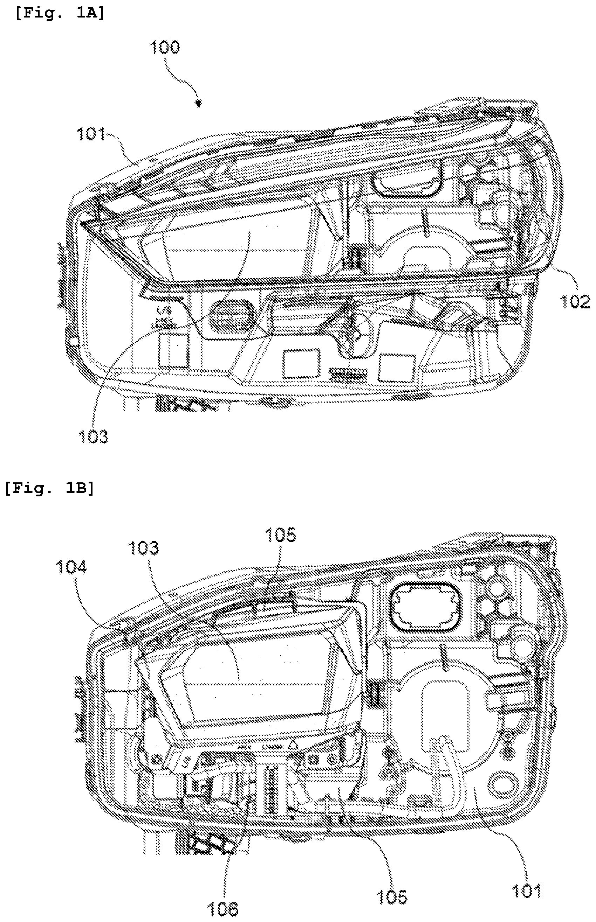

La figure 1A représente une vue de face d'un projecteur 100 pour véhicule automobile selon l'invention. Le projecteur 100 comprend de manière traditionnelle un boitier 101 destiné à être monté sur la structure de caisse à l'avant d'un véhicule automobile qui forme sa face arrière et une glace 102 qui forme sa face avant à travers laquelle un faisceau lumineux généré par un dispositif lumineux 103 est projeté. Un tel dispositif lumineux peut comprendre toute la connectique et les composants pour alimenter, par exemple, une ampoule à incandescence ou une diode électroluminescente. Comme cela apparait mieux sur la figure 1B, qui illustre une vue de face du projecteur 100 selon l'invention sans sa glace 102, le projecteur 100 comprend en outre un enjoliveur 104, qui encadre le dispositif lumineux 103 et s'étend vers l'avant du projecteur. Le dispositif lumineux 103 est monté sur un support 105, qui est fixé au boitier 101 au moyen de vis (non représentées).

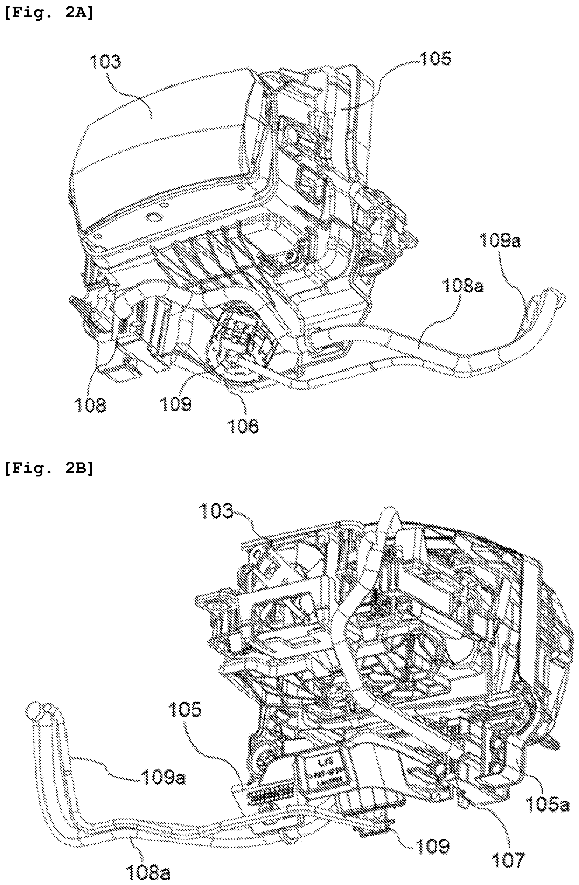

Les figures 2A et 2B représentent des vues en perspective de l'avant et de l'arrière du dispositif lumineux 103 et de son support 105 d'un projecteur 100 pour véhicule automobile selon l'invention. Un moteur électrique 106 pour modifier le positionnement du dispositif lumineux 103 est fixé au support 105 et une prise 107 pour alimenter le dispositif lumineux 103 est immobilisée par une paroi 105a du support, par exemple au moyen d'une ou plusieurs rainures et/ou d'un ou plusieurs ergots escamotables. Une première fiche 108 connectée à un premier faisceau 108a pour alimenter le dispositif lumineux 103 est branchée dans la prise 107 et une deuxième fiche 109 connectée à un deuxième faisceau 109a pour alimenter le moteur est branchée sur le moteur 106.

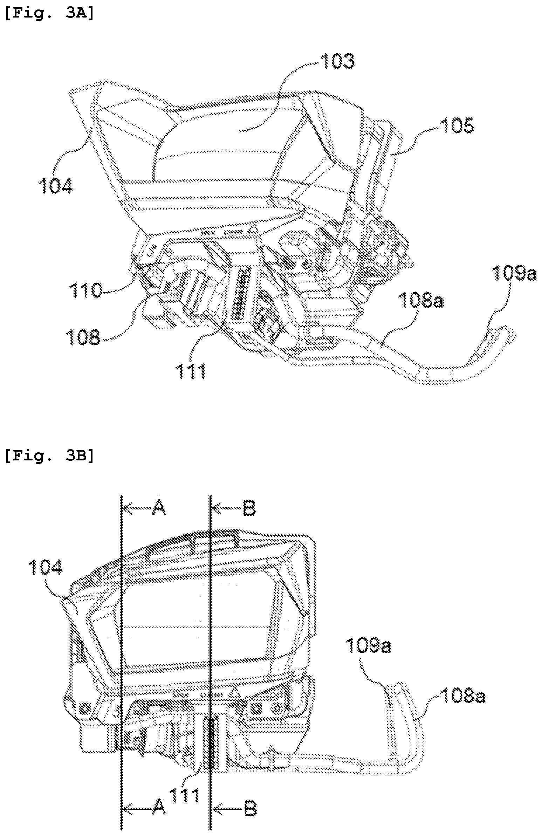

La figure 3A représente une vue en perspective du module lumineux 103, de son support 105 et de l'enjoliveur 104 d'un projecteur 100 pour véhicule automobile selon l'invention et la figure 3B représente une vue de face des mêmes éléments. L'enjoliveur 104 est fixé au support 105 au moyen d'au moins une vis. De manière avantageuse, l'enjoliveur 104 comporte un premier élément de sécurisation 110 en appui sur la première fiche 108 qui est branchée dans la prise 107 et un deuxième élément de sécurisation 111 en appui sur la deuxième fiche 109 qui est branchée sur le moteur 106. Ainsi, la première fiche 108 ne peut pas se débrancher de la prise 107 et la deuxième fiche 109 ne peut pas se débrancher du moteur 106 une fois que l'enjoliveur 104 est vissé sur le support 105. De cette manière, les connexions pour l'alimentation du module lumineux 103 et du moteur 106 sont sécurisées face aux vibrations dues à la conduite. De plus, le faisceau 108a s'insère dans l'espace délimité par le moteur 106, le support 105 et le deuxième élément de sécurisation 111, ce qui empêche notamment son déplacement vers l'avant du projecteur.

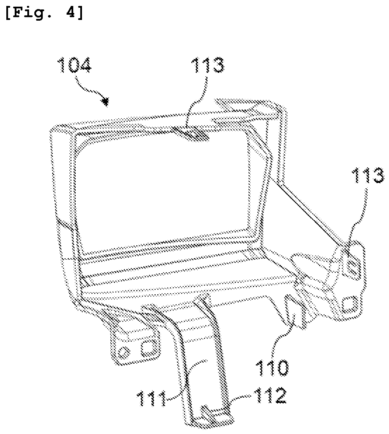

La figure 4 représente une vue en perspective de l'arrière de l'enjoliveur 104 d'un projecteur pour véhicule automobile 100 selon l'invention. Le premier élément de sécurisation 110 est préférentiellement formé d'une patte qui s'étend selon la longueur de l'enjoliveur. Le deuxième élément de sécurisation 111 est un rail courbe muni d'un ergot 112 en sa partie inférieure. L'enjoliveur 104 comprend en outre deux inserts 113 qui permettent de fixer l'enjoliveur sur le support 105 du module lumineux 103.

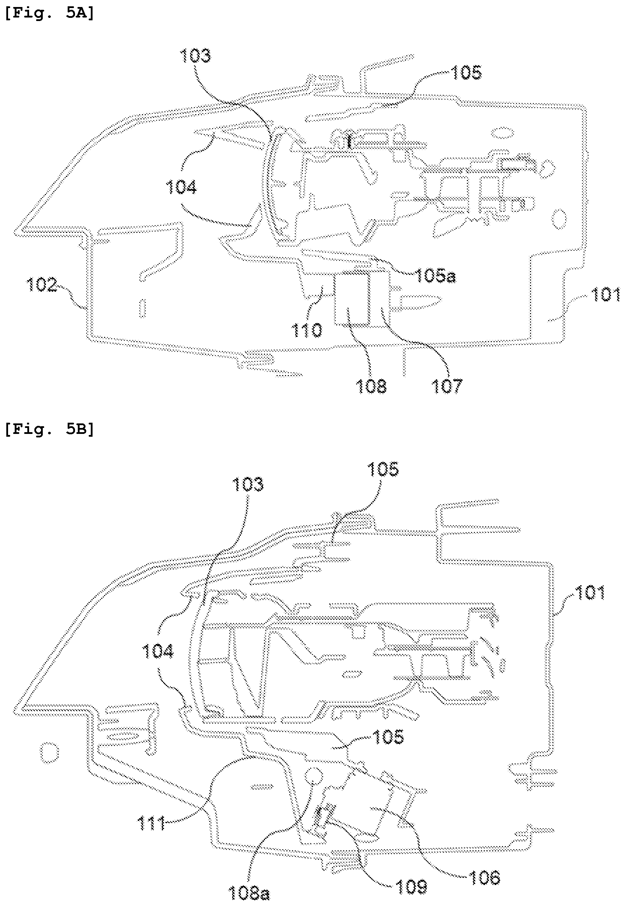

Les figures 5A et 5B représentent des vues en coupe selon les plans sécants A-A et B-B indiqués sur la figure 3B dans lesquelles les hachures sont omises pour permettre une meilleure clarté. Sur la figure 5A qui représente la coupe A-A, on voit que le premier élément de sécurisation 110 est en appui sur la première fiche 108 qui est brachée dans la prise 107 qui alimente le module lumineux 103. Sur la figure 5B qui représente la coupe B-B, le deuxième élément de sécurisation 111 de l'enjoliveur 104 est en appui sur la deuxième fiche 109 qui est branchée sur le moteur 106. Le premier faisceau 108a qui est connecté à la première fiche 108 s'insère dans l'espace délimité par le support 105, le moteur 106 et le deuxième élément de sécurisation 111.

Ainsi, grâce à l'invention, une solution est fournie pour améliorer la fiabilité des projecteurs pour véhicules automobiles en sécurisant mieux certaines connectiques et certains faisceaux d'alimentation contre les vibrations.

## Revendications

1. Projecteur (100) pour véhicule automobile, ledit projecteur comprenant un boîtier (101) formant sa face arrière qui coopère avec une glace (102) formant sa face avant, un dispositif lumineux (103) monté sur un support (105) fixé au boîtier (101) et une prise (107) pour alimenter le dispositif lumineux qui est immobilisée par au moins une paroi (105a) du support (105), **caractérisé en ce que** le projecteur comprend en outre, fixés au support (105), un moteur (106) pour modifier le positionnement du dispositif lumineux vis-à-vis du boîtier et un enjoliveur (104), l'enjoliveur comportant un premier élément de sécurisation (110) en appui sur une première fiche (108) branchée dans la prise (107) et un deuxième élément de sécurisation (111) en appui sur une deuxième fiche (109) branchée sur le moteur (106), ces éléments de sécurisation (110, 111) permettant d'empêcher un débranchement des fiches (108,109).

2. Projecteur selon la revendication 1, **caractérisé en ce que** le premier élément de sécurisation (110) est une patte qui s'étend selon la longueur de l'enjoliveur.

3. Projecteur selon l'une des revendications précédentes, **caractérisé en ce que** le deuxième élément de sécurisation (111) est un rail courbe muni d'un ergot (112) en sa partie inférieure.

4. Projecteur selon l'une des revendications précédentes, **caractérisé en ce que** le deuxième élément de sécurisation (111), le support (105) et le moteur (106) délimitent un espace au sein duquel s'insère un faisceau (108a) connecté à la première fiche (108).

5. Projecteur selon l'une des revendications précédentes, **caractérisé en ce que** l'enjoliveur (104) est vissé sur le support (105).

6. Projecteur selon l'une des revendications précédentes, **caractérisé en ce que** l'enjoliveur (104) est fixé au support grâce à au moins un insert (113).

7. Véhicule automobile, **caractérisé en ce qu'il** est équipé d'un projecteur (100) selon l'une des revendications précédentes.

## Patentansprüche

1. Scheinwerfer (100) für ein Kraftfahrzeug, wobei der Scheinwerfer ein Gehäuse (101), das seine Rückseite bildet und mit einer Scheibe (102) zusammenwirkt, die seine Vorderseite bildet, eine Lichtvorrichtung (103), die an einem Träger (105) befestigt ist, der an dem Gehäuse (101) befestigt ist, und eine Fassung (107) zum Antreiben der Lichtvorrichtung, die durch mindestens eine Wand (105a) des Trägers (105e) immobilisiert ist, umfasst, wobei der Scheinwerfer ferner, befestigt an dem Träger (105), einen Motor (106) zum Modifizieren der Positionierung umfasst der Beleuchtungsvorrichtung in Bezug auf das Gehäuse und eine Verkleidung (104), wobei die Verkleidung ein erstes Sicherheitsmoduselement (1100), das auf einem ersten Stecker (108), der mit der Buchse (107) verbunden ist, aufliegt, und ein zweites Sicherheitsmoduselement (111), das auf einem zweiten Stecker (109), der mit dem Motor (106) verbunden ist, aufliegt, umfasst, wobei diese Sicherheitsmoduselemente (110, 111) es ermöglichen, ein Trennen der Stecker (108, 109) zu verhindern.

2. Scheinwerfer nach Anspruch 1, wobei das erste Sicherheitsmoduselement (110) eine Lasche ist, die sich entlang der Länge der Verkleidung erstreckt.

3. Scheinwerfer nach einem der vorhergehenden Ansprüche, wobei das zweite Sicherheitsmoduselement (111) eine gekrümmte Schiene ist, die an ihrem unteren Teil mit einer Nase (112) versehen ist.

4. Scheinwerfer nach einem der vorhergehenden Ansprüche, wobei das zweite Sicherheitsmoduselement (111), der Träger (105) und der Motor (106) einen Raum definieren, in den ein Bündel (108a), das mit dem ersten Stecker (108) verbunden ist, eingesetzt ist.

5. Scheinwerfer nach einem der vorhergehenden Ansprüche, wobei die Verkleidung (104) auf den Träger (105) aufgeschraubt ist.

6. Scheinwerfer nach einem der vorhergehenden Ansprüche, wobei die Verkleidung (104) mittels mindestens eines Einsatzes (113) am Träger befestigt ist.

7. Kraftfahrzeug, **dadurch gekennzeichnet, dass** es mit einem Scheinwerfer (100) nach einem der vorhergehenden Ansprüche ausgestattet ist.

## Claims

1. Headlight (100) for a motor vehicle, said headlight comprising a housing (101) forming its rear face which cooperates with a glass (102) forming its front face, a light device (103) mounted on a support (105) fixed to the housing (101) and a socket (107) for powering the light device which is immobilised by at least one wall (105a) of the support (105e), wherein the headlight further comprises, fixed to the support (105), an engine (106) for modifying the positioning of the light device with respect to the housing and a trim (104), the trim comprising a first security mode item (1100) bearing on a first plug (108) connected to the socket (107) and a second security mode item (111) bearing on a second plug (109) connected to the engine (106), these security mode items (110, 111) making it possible to prevent disconnection of the plugs (108, 109).

2. Headlight according to claim 1, wherein the first security mode item (110) is a tab that extends along the length of the trim.

3. Headlight according to one of the previous claims, wherein the second security mode item (111) is a curved rail provided with a lug (112) at its lower part.

4. Headlight according to one of the previous claims, wherein the second security mode item (111), the support (105) and the engine (106) define a space within which a bundle (108a) connected to the first plug (108) is inserted.

5. Headlight according to one of the previous claims, wherein the trim (104) is screwed onto the support (105).

6. Headlight according to one of the previous claims, wherein the trim (104) is fixed to the support by means of at least one insert (113).

7. Motor vehicle **characterised in that** it is equipped with a headlight (100) according to one of the previous claims.
